Europäisches Patentamt

European Patent Office

Office européen des brevets

(11) Veröffentlichungsnummer: **0 061 198**
**B1**

(12) **EUROPÄISCHE PATENTSCHRIFT**

(45) Veröffentlichungstag der Patentschrift:
18.07.84

(21) Anmeldenummer: 82102453.6

(22) Anmeldetag: 24.03.82

(51) Int. Cl.³: **B 60 J 9/02**

(54) **Fenster, insbesondere für Fahrzeuge.**

(30) Priorität: 25.03.81 AT 1387/81
16.02.82 AT 583/82

(43) Veröffentlichungstag der Anmeldung:
29.09.82 Patentblatt 82/39

(45) Bekanntmachung des Hinweises auf die Patenterteilung:
18.07.84 Patentblatt 84/29

(84) Benannte Vertragsstaaten:
BE CH DE FR LI NL SE

(56) Entgegenhaltungen:
EP - A - 0 013 978
AT - A - 317 981
DE - C - 673 951
FR - A - 2 205 622
FR - A - 2 227 985
FR - A - 2 341 726
FR - A - 2 346 177

(73) Patentinhaber: **Vereinigte Metallwerke**
**Ranshofen-Berndorf AG, A-5282 Braunau am Inn (AT)**

(72) Erfinder: **Gemeinböck, Gerhard, Anton**
**Sattlergasse 115/17/7/23, A-1220 Wien (AT)**
Erfinder: **Hauer, Kurt, Schelleingasse 9-11/10/14,**
**A-1041 Wien (AT)**

(74) Vertreter: **Hain, Leonhard, Dipl.-Ing., Tal 18/IV,**
**D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft ein Fenster, insbesondere für Fahrzeuge, welches im Gefahrenfalle aus seiner Umrahmung lösbar ist, wobei das die Fensterscheibe haltende elastische Profil durch einen mittels eines Zugseiles befestigten Nothandgriff aus einer Klemmstellung herausreißbar ist (ein solches Fenster ist aus der AT-A-317 981 bekannt).

Es ist bei neuzeitlichen Wagen, die infolge Vollklimatisation keine voll öffenbare Fenster mehr besitzen, bekannt, die Scheibenhalterung so auszubilden, daß mittels eines Nothandgriffes der Profilgummi herausgerissen und damit die Scheibe aus ihrer Verankerung gelöst werden kann, um einen Notausstieg zu schaffen. Es hat sich in der Praxis jedoch gezeigt, daß dies in der Regel schwierig und mit großer Kraftanwendung verbunden ist, weil die Scheibe am Profilgummi, insbesondere am äußeren, festklebt und daher nur schwer aus dieser Verankerung herausgerissen werden kann. Dies trifft auch dann zu, wenn bereits der innere Profilgummi entfernt ist, da man in der Regel dann keine Angriffsmöglichkeit an der Scheibe mehr besitzt und Werkzeuge nicht vorhanden sind. Auch eine durch ein Seil geschaffene Verbindung zwischen Scheibe und dem unteren Rahmen stellt keine gute Handhabe dar, weil neben dem Klebeeffekt an der äußeren Dichtung auch der Angriffspunkt ungünstig liegt.

Daher liegt der Erfindung die Aufgabe zugrunde, ein Fenster, insbesondere für Fahrzeuge, zu schaffen, das sich sicher und leicht aus seiner Umrahmung lösen läßt.

Zur Lösung dieser Aufgabe ist ein Fenster der eingangs genannten Art gemäß der Erfindung dadurch gekennzeichnet, daß das Zugseil hinter der die Scheibe mit der inneren Abdeckung verbindenden Profilleiste liegt und von dem etwa in der Mitte des oberen Fensterrandes liegenden Nothandgriff nach beiden Seiten längs des Fensterrandes erst waagrecht, dann abwärts und unter Bildung einer Umkehrschlaufe aufwärts bis etwa zum Unterrand eines Ventilationsflügels verläuft und dort seitlich an der Scheibe befestigt ist.

Weitere Merkmale der Erfindung sind in den Unteransprüchen gekennzeichnet.

Die Erfindung wird nachfolgend anhand von Ausführungsbeispielen, die auch in der Zeichnung schematisiert dargestellt sind, näher beschrieben. Es zeigt

Fig. 1 eine Ansicht eines Fensters,

Fig. 2, 3 und 4 Schnitte nach den Linien II-II, III-III und IV-IV der Fig. 1,

Fig. 5 eine alternative Seilbefestigung zum Schnitt III-III,

Fig. 6 eine Ansicht eines Fensters ohne Ventilationsflügel mit einer einzigen Scheibe,

Fig. 7 eine Ansicht eines Details der Fig. 2,

Fig. 8 eine räumliche Darstellung der Scheibenbefestigung nach Fig. 4,

Fig. 9 einen Schnitt einer anderen Anordnung der Griffbefestigung,

Fig. 10 eine auseinandergezogene Darstellung dieser Griffbefestigung und

Fig. 11 diese Griffbefestigung im zusammengebauten Zustand.

Wie man aus der Zeichnung erkennen kann, besteht das Fenster aus einem Fensterrahmen 9, der in die Fahrzeugwand eingesetzt ist und in dem eine Fensterscheibe 3 und ein Ventilationsflügel 2 mittels einer äußeren Gummidichtung 16 und einer inneren elastischen Profilleiste 4 gehalten sind. Da der Ventilationsflügel 2 zu klein ist, um einen Ausstieg zu ermöglichen, muß dieser im Notfall samt der Scheibe 3 aus dem Fensterrahmen 9 herausziehbar sein, um so die volle Fensteröffnung für einen Notausstieg freizubekommen.

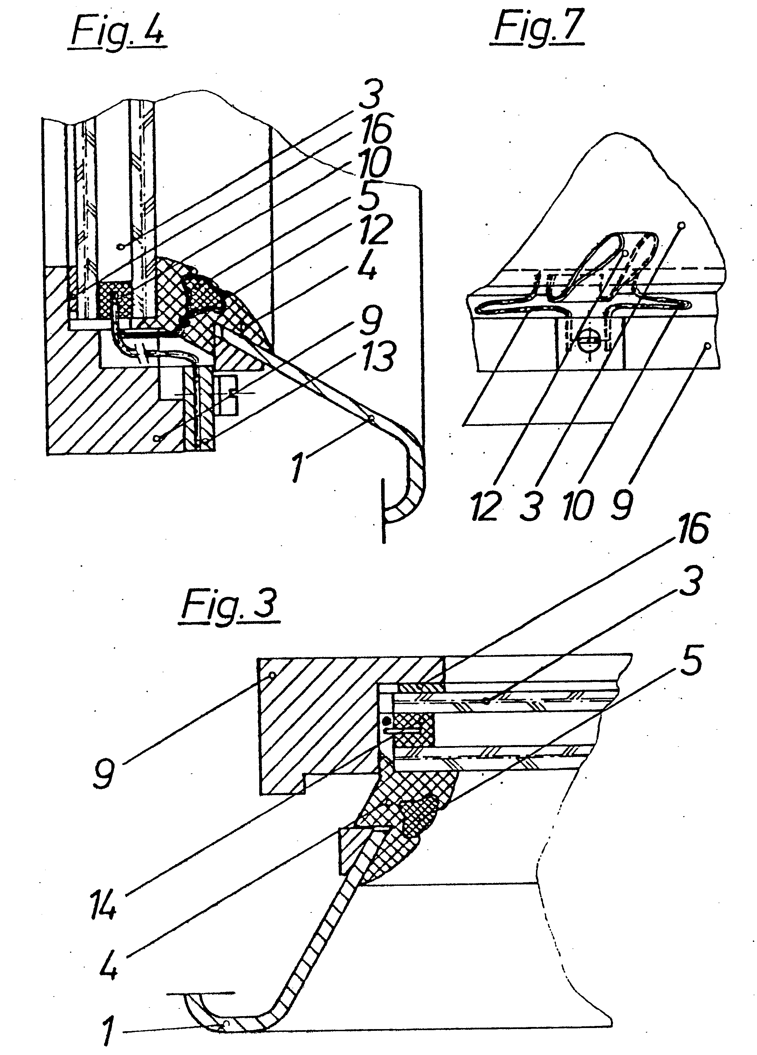

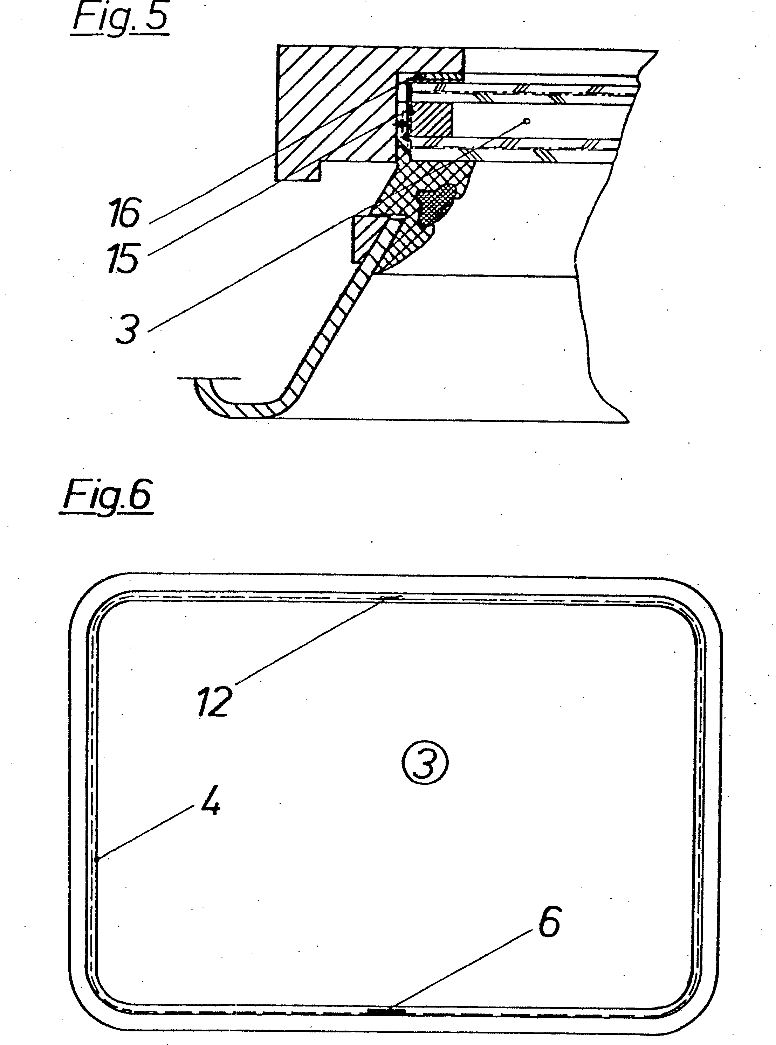

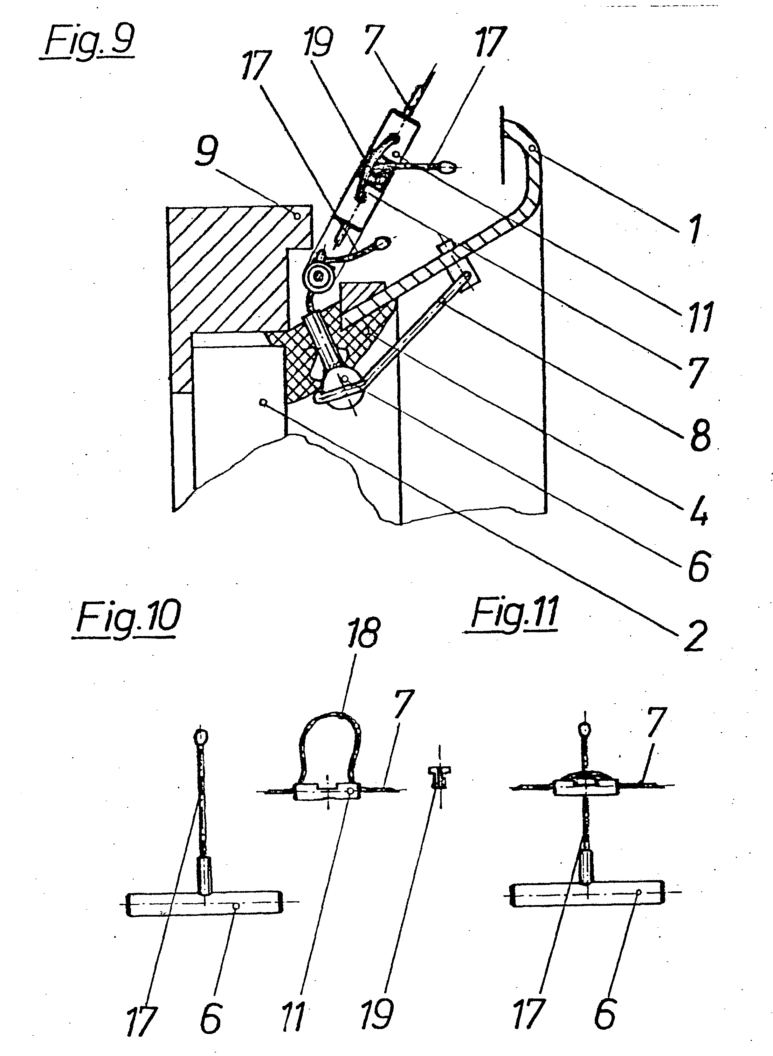

Dies wird in der Praxis dadurch bewerkstelligt, daß die den Ventilationsflügel 2 und die Scheibe 3 innen haltende Profilleiste 4 mittels eines Nothandgriffes 6, der durch einen Plombierdraht 8 gesichert ist, nach innen herausgezogen wird. Der Nothandgriff 6 besitzt zu diesem Zweck einen hinter der Profilleiste 4 befindlichen Querbalken 11 (Fig. 8). Da das Herausreißen der Profilleiste 4 in der Regel noch nicht genügt, weil die Scheibe — unter anderem auch durch Festkleben der Scheibe — etwa an der äußeren Gummidichtung 16 klebt, ist der Nothandgriff 6 noch durch ein Zugseil 7 mit der Scheibe 3 verbunden. Dieses Zugseil 7 ist zu diesem Zweck durch zwei Löcher des Querbalkens 11 gezogen, der somit in Längsrichtung gegen Verdrehen gesichert ist und ist unterhalb der Profilleiste 4 zu den Befestigungsstellen 14 in der Scheibe 3 geführt (Fig. 3), welche sich seitwärts nahe der Trennlinie zwischen dem Ventilationsflügel 2 und Scheibe 3 befinden. Das Zugseil ist dabei in einer Schlaufe geführt, welche an der Seite bis in den Bereich der unteren Ecken reicht. Dadurch ist gewährleistet, daß bei Betätigung des Nothandgriffes zuerst die Profilleiste 4 bis zu den unteren Ecken herausgerissen wird, bevor sich das Zugseil 7 spannt und an den Befestigungsstellen 14 an der Scheibe 3 angreift, welche dann in einer Art Kniehebelbewegung mit dem Ventilationsflügel gemeinsam aus der Fensterebene herausklappt. Ein vollständiges Herausreißen der Scheibe erfolgt dann durch weiteres Anziehen am Zugseil über die Profilleiste, die am unteren Rand der Scheibe mittels eines Gewebebandes 12 mit dieser verbunden ist, das um das Spreizkeilprofil 5 geschlungen und damit auch mit der Profilleiste 4 verbunden ist (Fig. 4).

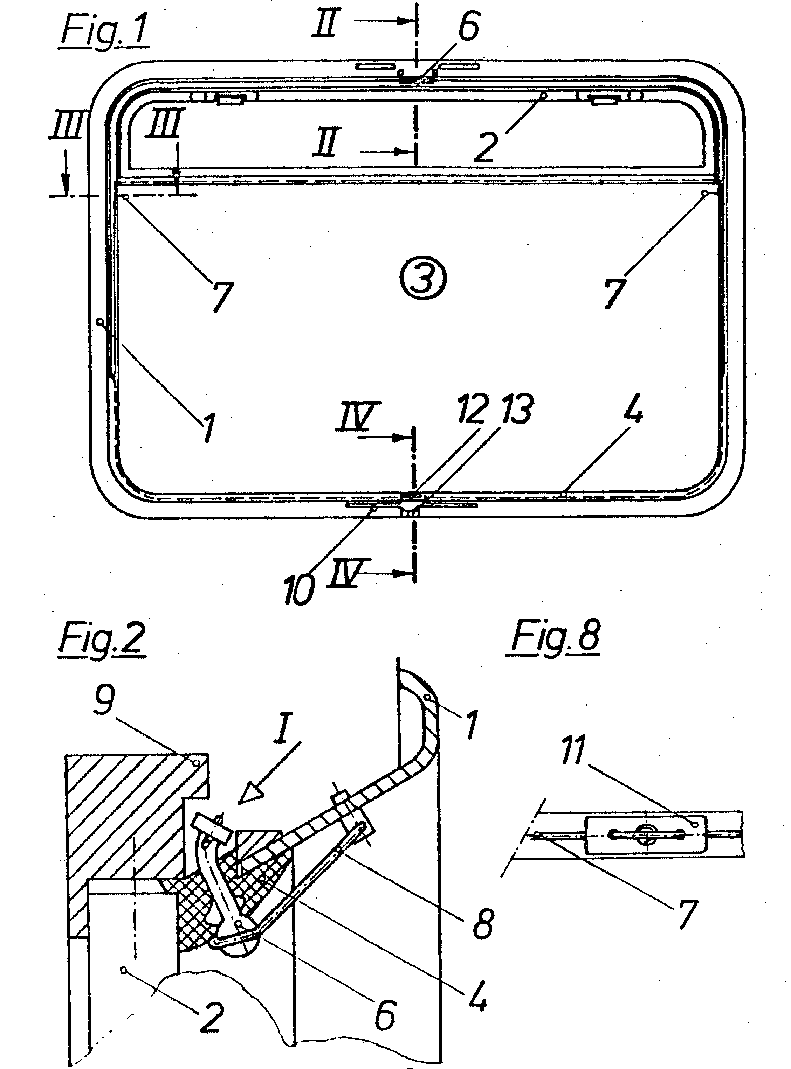

Die Erfindung ist auf das in Fig. 3 dargestellte Ausführungsbeispiel nicht beschränkt, bei dem das Zugseil in der Scheibe bereits bei deren Herstellung befestigt ist. Es kann auch gemäß Fig. 5, insbesondere bei nachträglicher Einrichtung, über ein die Scheibe 3 an der Außenseite übergreifendes Profilstück 15, an dem das Zugseil befestigt ist, an der Scheibe 3 angreifen. Das Profilstück 15 braucht nur kurz ausgebildet zu sein und daher nicht die ganze Scheibe zu umfassen. Das Profilstück kann als Winkel- oder U-Profil ausgebildet sein. Wird der Ventilationsflügel 2 fortgelassen und besteht das Fenster daher nur aus einer einzigen Scheibe 3, so ist es gemäß Fig. 6 auch möglich, den Nothandgriff 6 vorzugsweise an der Unterseite des Fensters anzuordnen. Die Profilleiste 4 ist an der dem Nothandgriff 6 gegenüberliegenden Seite direkt oder über das Gewebeband 12 mit der Scheibe 3 verbunden. Es wird somit nach Betätigung des Nothandgriffes 6 die Profilleiste 4 auf der ganzen Länge herausgerissen und sodann über das Gewebeband 12 die Scheibe 3 aus der Fensteröffnung gezogen. Um ein vollständiges Abstürzen der Scheibe 3 aus dem Fensterrahmen zu verhindern, ist diese an der Unterseite über ein im Fensterrahmen 9 mittels eines Haftelementes 13 befestigtes Seil 10 gehalten (Fig. 1, 4). In äquivalenter Weise ist auch der Ventilationsflügel 2 mit der Oberseite des Fensterrahmens 9 verbunden.

Wie man aus den Fig. 9 bis 11 erkennen kann, ist die Fensterscheibe 2 im Fensterrahmen 9 durch die elastische Profilleiste 4 gehalten, die vom Nothandgriff 6, der mittels eines plombierten Drahtes 8 an einer Fensterabdeckung 1 befestigt ist, durchsetzt ist. Der Nothandgriff 6 ist durch ein Seilstück 17 mit dem Querbalken 11 verbunden, der seinerseits das Zugseil 7 zum Herausreißen der Profilleiste 4 hält. Um den Nothandgriff ohne großen Widerstand aus der Profilleiste 4 herausziehen zu können, ist das Seilstück 17 länger ausgebildet und durch einen im Querbalken eingesetzten Nippel 19 gezogen, wobei das freie Ende eine Verdickung aufweist, die ein vollständiges Durchziehen verhindert. Es wird somit zuerst die ganze Länge des Seilstükkes 17 durchgezogen, bis die Verdickung am Nippel 19 anliegt und erst dann die Kraftübertragung vom Nothandgriff 6 auf den Querbalken 11 bzw. das Zugseil 7 übertragen, wodurch dann der eingangs beschriebene Auslösevorgang in Gang gesetzt wird.

Die Erfindung ist auf die dargestellten Ausführungsbeispiele nicht beschränkt, da an die Stelle eines Zugseiles, z. B. aus Draht, auch eine Kette treten kann bzw. die Seilschlaufe 18 des Zugseiles 7 gleich selbst durch die Profilleiste gezogen und am Nothandgriff 6 befestigt werden kann.

## Patentansprüche

1. Fenster, insbesondere für Fahrzeuge, das im Gefahrenfalle aus seiner Umrahmung lösbar ist, wobei die die Fensterscheibe (3) haltende elastische Profilleiste (4) durch einen mittels eines Zugseiles (7) befestigten Nothandgriff (6) aus einer Klemmstellung herausreißbar ist, dadurch gekennzeichnet, daß das Zugseil (7) hinter der die Scheibe (3) mit einer inneren Fensterabdekkung (1) verbindenden Profilleiste (4) liegt und von dem etwa in der Mitte des oberen Fensterrandes liegenden Nothandgriff (6) nach beiden Seiten längs des Fensterrandes erst waagrecht, dann abwärts und unter Bildung einer Umkehrschlaufe aufwärts bis etwa zum Unterrand eines Ventilationsflügels (2) verläuft und dort seitlich an der Scheibe (3) befestigt ist.

2. Fenster nach Anspruch 1, dadurch gekennzeichnet, daß die Schlaufen des Seiles (7) bis in den Bereich der unteren Fensterecken reichen (Fig. 1).

3. Fenster nach Anspruch 1 oder 2, dadurch gekennzeichnet, daß für die Befestigung des Zugseiles (7) an der Glasscheibe (3) ein den Scheibenrand (3) bis an die Außenseite übergreifendes Profilstück (15) vorgesehen ist (Fig. 5).

4. Fenster nach einem der Ansprüche 1 bis 3, dadurch gekennzeichnet, daß das Zugseil (7) auf einem hinter der elastischen Profilleiste (4) liegenden, parallel zum Fensterrahmen verlaufenden Querbalken (11) des Nothandgriffes (6) befestigt ist, wobei das Seil durch Bohrungen des Balkens (11), die in dessen Längsrichtung angeordnet sind, verläuft und diesen somit gegen Verdrehen sichert (Fig. 2).

5. Fenster nach einem der Ansprüche 1 bis 4, dadurch gekennzeichnet, daß die elastische Profilleiste (4) an der dem Nothandgriff gegenüberliegenden (unteren) Rahmenseite mittels eines zusätzlichen flexiblen Zugelementes, insbesondere eines Gewebebandes (12), mit der Scheibe (3) verbunden ist (Fig. 4).

6. Fenster nach einem der Ansprüche 1 bis 5, dadurch gekennzeichnet, daß der Nothandgriff (6) über ein flexibles Zugglied, vorzugsweise ein zusätzliches Seilstück (17) oder eine Seilschlaufe (18) mit dem am Zugseil (7) befestigten Querbalken (11) verbunden ist.

7. Fenster nach Anspruch 6, dadurch gekennzeichnet, daß das zusätzliche Seilstück (17) den Querbalken (11) an einem Nippel (19) durchsetzt und an seinem Ende verdickt ist.

## Claims

1. Window, in particular for vehicles, which can be removed from its frame in case of emergency, the resilient profiled band (4) carrying the window-pane (3) being able to be pulled out of a clamping position with the help of an emergency handle (6) which is fastened by means of a pull rope (7), characterized in that the pull rope (7) is situated behind the profiled band (4) connecting the pane (3) with an interior window covering (1) and extends from the emergency handle (6) arranged approximately in the middle of the upper window edge to both sides along the window edge, first horizontally, then downwardly and, forming a reserving loop, upwardly again, to about the lower edge of a ventilating wing (2) and that it is fixed there laterally to the window pane (3).

2. Window according to claim 1, characterized in that the loops of the rope (7) extend to within the region of the lower window corners (fig. 1).

3. Window according to claim 1 or 2, characterized in that for fastening the pull rope (7) to the window-pane (3) a profiled piece (15) is provided which overlaps the edge of the window-pane (3) up to its exterior surface (fig. 5).

4. Window according to one of the claims 1 to 3, characterized in that the pull rope (7) is fastened to a crossbar (11) of the emergency handle (6), the crossbar being situated behind the resilient profiled band (4) and extending parallel to the window frame, the rope passing through bores of the bar (11) which are arranged in the longitudinal direction thereof, thus securing the bar against rotation (fig. 2).

5. Window according to one of the claims 1 to 4, characterized in that the resilient profiled band (4) is connected to the pane (3) at the (bottom) side of the frame situated opposite the emergency handle by means of an additional, flexible pull member, particularly a fabric band (12) (fig. 4).

6. Window according to one of the claims 1 to 5, characterized in that the emergency handle (6) is connected to the crossbar (11) fastened to the pull rope (7) by means of a flexible pull element, preferably an additional rope piece (17) or a rope loop (18).

7. Window according to claim 6, characterized in that the additional rope piece (17) passes through the crossbar (11) at a nipple (19) and that it has a thickened end.

**Revendications**

1. Fenêtre, en particulier pour véhicules, pouvant être désolidarisée de son encadrement en cas de danger, la barrette profilée élastique (4) maintenant la vitre (3) en place pouvant être arrachée, à l'écart d'une position de coincement, par l'intermédiaire d'une poignée de secours (6) fixée à l'aide d'un câble de traction (7), fenêtre caractérisée par le fait que le câble de traction (7) se trouve derrière la barrette profilée (4) reliant ladite vitre (3) à un recouvrement interne (1) de ladite fenêtre, ce câble s'étendant tout d'abord horizontalement de part et d'autre le long de la bordure de la fenêtre à partir de la poignée de secours (6) disposée sensiblement au centre de la bordure supérieure de la fenêtre, puis vers le bas, puis vers le haut, en formant une boucle de retour, jusqu'au voisinage de la bordure inférieure d'un panneau de ventilation (2), emplacement auquel ledit câble est fixé latéralement à ladite vitre (3).

2. Fenêtre selon la revendication 1, caractérisée par le fait que les boucles du câble (7) s'étendent jusqu'au voisinage des coins inférieurs de la fenêtre (fig. 1).

3. Fenêtre selon la revendication 1 ou 2, caractérisée par le fait que, pour assurer la fixation du câble de traction (7) à la vitre (3), il est prévu une pièce profilée (15) qui emprisonne la bordure de la vitre (3) jusqu'à sa face extérieure (fig. 5).

4. Fenêtre selon l'une des revendications 1 à 3, caractérisée par le fait que le câble de traction (7) est fixé à une membrure transversale (11) de la poignée de secours (6) qui se trouve derrière la barrette profilée élastique (4) et s'étend parallèlement au châssis de la fenêtre, ledit câble traversant des trous pratiqués dans le sens longitudinal de ladite membrure (11), en interdisant ainsi une rotation de cette membrure (fig. 2).

5. Fenêtre selon l'une des revendications 1 à 4, caractérisée par le fait que la barrette profilée élastique (4) est reliée à la vitre (3), du côté (inférieur) de l'encadrement opposé à la poignée de secours, au moyen d'un élément supplémentaire flexible de traction, en particulier d'une bande de tissu (12) (fig. 4).

6. Fenêtre selon l'une des revendications 1 à 5, caractérisée par le fait que la poignée de secours (6) est reliée, à la membrure transversale (11) fixée au câble de traction (7), par l'intermédiaire d'un organe flexible de traction, de préférence un tronçon de câble supplémentaire (17) ou une boucle (18) de câble.

7. Fenêtre selon la revendication 6, caractérisée par le fait que le tronçon de câble supplémentaire (17) traverse de part en part la membrure transversale (11) dans un coussinet (19), et présente une extrémité épaissie.

0 061 198

Fig. 1

Fig. 2

Fig. 8

0 061 198

_Fig. 4_ _Fig.7_

3
16
10
5
12
4
9
13
1

12  3  10  9

16
3
5

_Fig. 3_

9
14
4
1

7

## Fig.5

16

15

3

## Fig.6

12

③

4

6

Fig.9

Fig.10

Fig.11